# EUROPEAN PATENT APPLICATION

(11) **EP 0 869 387 A1**
(43) Date of publication of application: **07.10.1998**
(21) Application number: 97200963.3
(22) Date of filing: 02.04.1997
(51) Int. Cl.: G02F 1/313, G02F 1/29, G02F 1/01

(54) **Optical switch**

(71) Applicant: Akzo Nobel N.V., 6824 BM Arnhem (NL)
(72) Inventor: Hoekstra, Tsjerk Hans, 6951 LZ Dieren (NL); Propstra, Kornelis, 9191 HL Dokkum (NL)
(74) Representative: Schalkwijk, Pieter Cornelis

(57) **Abstract**

The invention pertains to an optical switch comprising at least one input channel and at least two output channels, the input and output channels forming a junction, wherein at least one additional and idle channel is provided at or near the said junction. The switch exhibits improved extinction and reduced crosstalk.

## Description

The invention pertains to an optical switch comprising at least one input channel and at least two output channels which input and output channels form a junction.

Optical devices are known, e.g., from the description given by M. Klein Koerkamp, et al., "Design and fabrication of a pigtailed thermo-optic 1x2 switch", Proceedings Integrated Photonics Research, OSA Technical Digest Series, 3, pp 274-276. The working of the switches according to Klein Koerkamp et al. is generally based on the phenomenon of the optical waveguide material employed exhibiting a temperature dependent refractive index (polarisation independent thermo-optical effect). Such devices have been realised, int.al., in inorganic materials such as ion-exchanged glass. An advantage of the use of all-polymeric waveguides for thermo-optical devices disclosed by Klein Koerkamp et al. consists in that a modest increase in temperature may result in a large index of refraction change. The device described by Klein Koerkamp is an all-polymeric planar switch. Switching is achieved by employing mode evolution.

WO 96/38756 pertains to a thermo-optical device comprising a waveguiding structure (numeral 1 in the figures of the said patent application) which comprises at least one input light channel or path (2) and at least two output light paths (3,3') forming a first y-junction (4), at least one output light path (3,3') being provided with primary heating elements (5,5'), wherein the output light paths (3,3') are provided with an additional branch (6) forming a second y-junction (7) and at least one of the branches (6,6') is provided with a secondary heating element (8,8'). The additional branches (6) may be positioned in the opposite direction, such that in each of the second y-junctions (7) one branch (6') coincides with one of the output light paths (3,3') of the first y-junction (4).

When using this thermo optical device, only one output path of the second y-junction is a functional output path. When this functional output path is in the "off" state, the other branch is used for directing light into, in order to decrease the optical power in the functional output path, thus improving the extinction and decreasing crosstalk.

Within the framework of the present invention the term "extinction" is defined as: 10*log ((optical power in the (functional) output that is switched on)/(optical power in the (functional) output that is switched off)). "Crosstalk" is defined as: 10*log ((optical power in the (functional) output that is switched off)/(optical power in the input)). Both parameters are expressed in decibels or dB.

While the disclosed polymeric optical devices sufficiently establish that optical effects can be employed to achieve (effective) switching, modern applications of the switches require a still further improvement of the extinction and a still further decrease of crosstalk.

To solve these problems the invention consists in that in an optical switch of the type identified in the opening paragraph at least one additional and idle (output) channel is provided at or near the said junction.

Thus, a major portion of power that would normally be directed to the output that is switched off (in the 'off' state), which power very strongly influences both extinction and crosstalk (see definitions given above), is now directed to the idle output channel. Depending on the geometry and materials of the switch, both extinction and crosstalk can be additionally improved by a further 50% or more when compared to the prior art devices discussed above. Adaption of the geometry and selection of materials to optimise the effect of the present invention is within the grasp of the skilled person in this field.

The term "idle" means that a signal in the input channel cannot be switched to an output channel characterised as such.

In a preferred embodiment, the idle output channel is provided with an absorber. By using an absorber the power in the idle output channel is transformed in a form of energy which can have no detrimental consequences for the functioning of the switch. The absorber can, e.g., be made of a metal.

Polymeric thermo-optical digital switches are preferred, since even a modest temperature change can give rise to a large change in refractive index.

Devices according to the invention can be used with advantage in optical communication networks of various kinds. Generally, the optical components either will be directly combined with optical components such as light sources (laser diodes) or detectors, or they will be coupled to input and output optical fibres, usually glass fibres.

An integrated thermo-optical device may be built up, e.g., as follows. Underneath the waveguiding structure there is a support such as a glass or silicon substrate. On the substrate the following successive layers can be identified: a lower cladding layer, a core layer (guiding layer), and an upper cladding layer. The cladding material may be glass or a polymeric material. Said cladding layers have an index of refraction lower than that of the core layer. The core layer, which comprises the actual waveguiding channels or paths, may be made of inorganic or polymeric material.

When using a polymeric core layer, the use of polymeric cladding layers is preferred. In these all-polymeric devices it is easy to adjust the physical properties of the various layers one to the other, providing a more stable device. The polymers used for these layers are so-called optical polymers.

The refractive index of the optical polymers used will generally be within the range of from 1.4 to 1.8, preferably of from 1.45 to 1.60. The refractive index contrast between the two cladding layers may vary when a thermo-optical device with asymmetric layer build-up is used.

Optical polymers are known, and the person of ordinary skill in the art is able to choose polymers having the appropriate refractive indices, or to adapt the refractive indices of polymers by chemical modification, e.g., by introducing monomeric units that affect the refractive index. As all polymers exhibit a thermo-optical effect, basically any polymer having sufficient transparency for the wavelength used can be employed in the core of the waveguide component. Said transparency requirement also holds for the cladding. Particularly suitable optical polymers include polyacrylates, polycarbonates, polyimides, polyureas, polyarylates.

A waveguiding structure according to the invention can be provided with a pattern of light paths in various manners. Methods to achieve this are known in the art. For example, it is possible to introduce such a pattern by removing portions of the slab waveguide, e.g., by means of wet-chemical or dry etching techniques (reactive ion etching, laser ablation), and to optionally fill the gaps formed with a material having a lower index of refraction. Or, e.g., photosensitive material that can be developed after irradiation may be used. In the case of a negative photoresist the photosensitive material is resistent to the developer after irradiation, and the portions of the material that were not subjected to irradiation can be removed. It is preferred to use a positive photoresist, and to define the channels by means of an irradiation mask covering the waveguide portions that will form the channels. The irradiated material then is removed using developer, after which a material of lower refractive index is applied.

It is also possible to use a core material that allows defining a waveguide pattern without material having to be removed. Materials of this nature exist, e.g., those that will undergo chemical or physical conversion into a material having a different refractive index when subjected to heat, light, or UV radiation. In the cases where this conversion results in an increase in the refractive index, the treated material will be employed as core material for the waveguide channels. This can be carried through by employing a mask in which the openings are identical with the desired waveguide pattern. In the case of the treatment leading to a decrease of the refractive index, the treated material is suitable as a cladding material. In that case a mask as mentioned above is used, i.e., one that covers the desired waveguide channels. A particular, and preferred, embodiment of this type of core material is formed by polymers that can be bleached, i.e., of which the refractive index is lowered by irradiation with visible light or UV, without the physical and mechanical properties being substantially affected. To this end it is preferred to provide the slab waveguide with a mask that covers the desired pattern of waveguide channels, and to lower the refractive index of the surrounding material by means of (usually blue) light or UV radiation. Bleachable polymers have been described in EP 358 476.

Of course, the invention is not restricted to thermo-optical switches. Another possibility is, amongst others, an electro-optical switch employing a non-linear optical material.

Optically non-linear or NLO materials are known. In such materials non-linear polarisation occurs under the influence of an external field of force (such as an electric field). Alternatively, NLO effects can be generated opto-optically or acousto-optically. In order to render polymeric NLO materials NLO-active (obtain the desired NLO effect macroscopically), the groups present in such a material, usually hyperpolarisable sidegroups, first have to be aligned (poled). Such alignment is commonly effected by exposing the polymeric material to electric (dc) voltage, the so-called poling field, with such heating as will render the polymeric chains sufficiently mobile for orientation. NLO polymers are described in, int. al., EP 350 112, EP 350 113, EP 358 476, EP 445 864, EP 378 185, and EP 359 648.

Making a polymeric optical waveguide according to the invention will generally involve applying a solution of the polymer used as the lower cladding to a substrate, e.g., by means of spincoating, followed by evaporating the solvent. Subsequently, the core layer, and the upper cladding layer, can be applied in the same manner. On top of the upper cladding the heating element or electrodes will be placed, e.g., by means of sputtering, chemical vapour deposition, or evaporation and standard lithographic techniques. For fixation and finishing a coating layer may be applied on top of the entire structure, so as to allow better handling of the device. Alternatively, instead of a coating layer a glue layer may be used for fixation, after which the total structure can be finished by placing an object glass on it.

Suitable substrates are for the switches of the present invention are, int. al., silicon wafers, ceramic materials or plastics laminates, such as those based on epoxy resin which may be reinforced or not. Suitable substrates are known to the skilled man. Preferred are substrates that, by virtue of a high thermal conductivity, can function as a heat sink. This can considerably speed up the thermo-optical switching process. For, considering that switching to, say, the "on" state can be reached by heating the waveguide, reaching the "off" state will merely require leaving the waveguide to cool. The preferred substrates in this respect are glass, metal, or ceramics, and particularly silicon.

The heating element or electrodes will generally be made up of a thin film electric conductor, usually a thin metal film. Such a thermal energy generating conductor can also be called "resistor wire" for short. Of course, suitable thermal energy generating conductors are not restricted to the wire form.

Materials for making heating elements or electrodes include noble metals, such as gold, platinum, silver, palladium, or aluminium, as well as those materials known as transparent electrodes, e.g., indium tin oxide. Aluminium and gold are preferred.

In the case of NLO polymers being employed, the heating element may be put to initial use during the alignment of the NLO polymers.

A very useful way of exploiting the merits of the present invention is by simply using a N x M optical switch as a N x P (basic building block) switch, wherein M, N, and P are integers, N is at least 1, M is at least 3, and P is smaller than M. By designating one or more of the outputs as idle one can obtain results similar to those obtained with the switches described above.

The invention also relates to a device comprising the above described switch.

The following unlimitative example will serve as an illustration of the present invention.
- Figure 1: shows a top view of an 1x2 thermo optical switch.
- Figure 2: shows a top view of an 1x3 thermo optical switch.
- Figure 3: shows the extinction of the switches of Figs. 1 and 2 as a function of electrical power fed to the heater elements.

### EXAMPLE

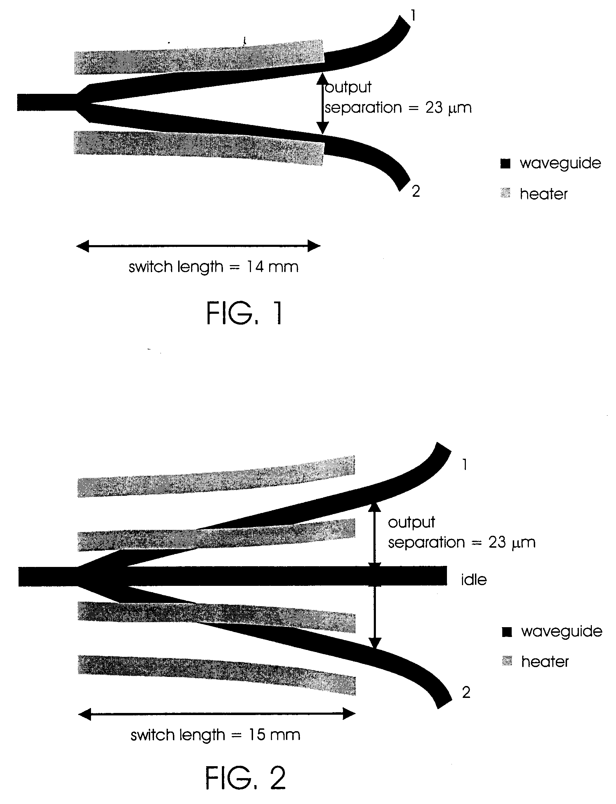

Figures 1 and 2 show a 1x2 and a 1x3 polymeric thermo optical digital switch respectively (the aspect ratio and scale of the drawings can be derived from the length of the switch and the separation). The switches were manufactured (using spincoating and RIE as described above) on a same silicon wafer and comprise the same polymer layers (5 in all). The second (of middle) output channel of the 1x3 switch was used as an idle channel, i.e. the 1x3 switch was used as an 1x2 switch and the extinction is determined over the left (1) and the right (2) output channel.

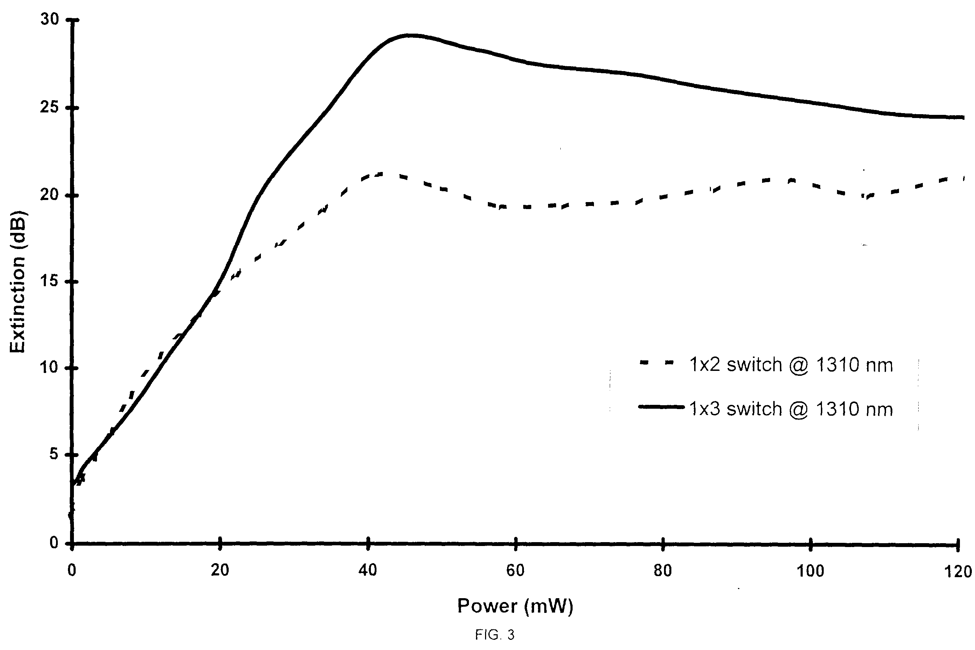

Figure 3 shows the extinction (for a signal having a wavelength of 1310 nm) of both switches as a function of the electrical power fed to the heater elements.

Insertion loss (not shown in Figure 3) is about equal (1.5 dB) for both switches in the relevant power range (>40 mW). Thus, the crosstalk of the switch according to the invention is reduced (which follows from the definition of crosstalk and the relation between extinction, crosstalk, and insertion loss).
The experiments were repeated with a signal having a wavelength of 1550 nm and similar results were obtained.

## Claims

1. Optical switch comprising at least one input channel and at least two output channels, the input and output channels forming a junction, characterised in that at least one additional and idle channel is provided at or near the said junction.

2. Optical switch according to claim 1, characterised in that the idle output channel is provided with an absorber.

3. Optical switch according to claim 1 or 2, characterised in that the switch is digital.

4. Optical switch according to any one of the claims 1-3, characterised in that the switch is a thermo optical switch.

5. Optical switch according to any one of the claims 1-4, characterised in the switch is at least partially made of a polymer.

6. Use of a N x M optical switch as a N x P switch, wherein M, N, and P are integers, N is at least 1, M is at least 3, and P is smaller than M.

7. Device comprising an optical switch according to any one of the claims 1-5.
